# EUROPEAN PATENT APPLICATION

(11) **EP 2 114 095 A1**
(43) Date of publication of application: **04.11.2009**
(21) Application number: 08103795.4
(22) Date of filing: 30.04.2008
(51) Int. Cl.: H04W 4/00

(54) **Method and device for selecting a network node for handover and communication system comprising such device**

(71) Applicant: Nokia Siemens Networks Oy, 02610 Espoo (FI)
(72) Inventor: Bültmann, Daniel, 52070 Aachen (DE); Luo, Jijun, 81549 München (DE); Schulz, Egon, Dr., 80993 München (DE); Walke, Bernhard, Prof., 52146 Würselen (DE)

(57) **Abstract**

A method and a device are provided for selecting a network node for handover of a mobile terminal is provided, wherein said selection is based on a profile information of said mobile terminal comprising at least two networks that are coupled with different levels of integration. Furthermore, a communication system comprising such device is suggested.

## Description

The invention relates to a method and to a device for selecting a network node for handover and to a communication system comprising such a device.

Mobile devices are continuously evolving to further meet customers' needs. An important part of such evolution is the support of multiple radio access technologies and seamless user mobility in heterogeneous environments.

Network Controlled Handover (NCHO) mechanisms rely on measurements and on information of available radio access technologies. The NCHO requires means for control and management of the radio access technology interfaces.

However, a handover decision process may be distributed. The authority for handover decisions remains with the network node (referred to as Point of Service (PoS), see also IEEE 802.21), but is based on information provided by the user terminal. Depending on the level of network coupling between different radio access technologies the responsible network node may be within the radio access network (tight coupling of different technologies), within the network operator's core network (loose coupling) or even within the Internet (very loose coupling). When the MIHF allocation (POS) is not properly selected, the handover decision will result in
- a non-optimal decision for the radio access point and/or for the base station (BS);
- a longer handover decision making process;
- an increased complexity regarding a communication between protocol peers.

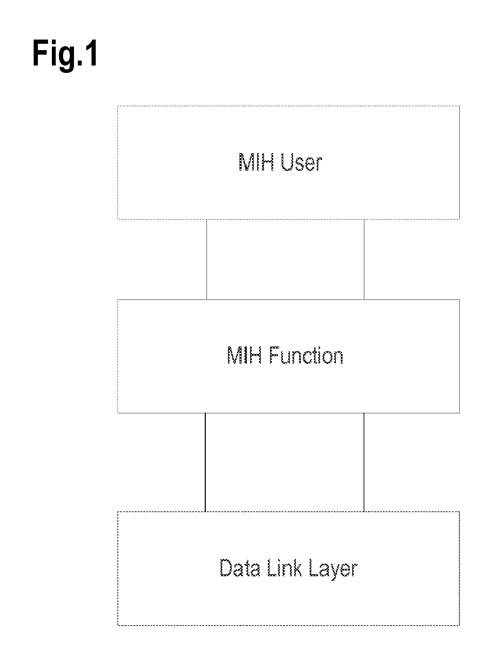

The IEEE 802.21 Media Independent Handover protocol aims towards a media-independent convergence layer that provides to the upper layers enough intelligence and capabilities to control and manage different access networks. The basic architecture of the IEEE 802.21 MIH capable node can be seen in **Fig.1** comprising an MIH Function (MIHF) which is a set of functions supporting handovers and providing services to registered users. A MIHF user can be each one of the upper layers and may utilize services provided by the MIHF through predefined Service Access Points (SAPs) to process (make and execute) handover decisions.

The standard defines two service access points (SAP) and three media-independent services: An event, a command and an information service. Those media-independent services allow the entities in the upper layers to control and monitor the radio access technologies. Each entity in the upper layers that uses the services provided by the convergence layer is said to be an MIH user, which are out of scope of the IEEE 802.21 standard and may represent higher level entities such as Mobile IP, Handover Decision entities, etc.

On-going standardization on IEEE P802.21/D07.00, "Draft IEEE Standard for local and metropolitan area Networks: Media Independent Handover Services, July 2007" defines handover signaling for heterogeneous network architectures. It supports both network- and mobile-initiated handover schemes and includes mechanisms for resource reservation. The handover process supported by IEEE 802.21 can be separated by five phases:
i) Monitoring of current links: The mobile node or the PoA on the network side monitors the quality of active links. If the mobile terminal monitors active links it will send measurement reports to the PoS on a regular basis.
ii) Handover initiation: If an active link quality falls below a given threshold, this will be detected during the monitoring phase and the initiation of a handover is activated either on the network or on the mobile side.
iii) Handover candidate detection: The mobile node scans for available candidate cells that could serve as handover targets. This set is built by the mobile node and may be reduced by the network side if available resources in candidate cells are low.
iv) Handover: If the candidate is determined, the handover is carried out. This includes resource reservation within the target cell.
v) Handover finalization: After handover to the target cell is completed, the handover is finalized. This step includes Layer-3 (IP) handover and de-allocating resources in the source cell.

The approach supported by IEEE 802.21 bears the following disadvantages:
a. During the handover candidate detection phase, the serving PoS queries the handover candidates provided by the mobile terminal on available resources. If there are multiple candidates this procedure will introduce unnecessary delay.
b. The authority on handover decisions is distributed between network nodes. Target cells may only respond to resource queries issued by the source PoS. The final decision is made by the source PoS. Responses to resource queries do not include any assurance that resources will be available when they are reserved. This can lead to stability problems in high load scenarios.

The **problem** to be solved is to overcome the disadvantages set forth above and in particular to provide an efficient solution for utilizing and selecting a Point-of-Service in handover scenarios and in particular to efficiently process handovers in particular between different radio access technologies.

This problem is solved according to the features of the independent claims. Further embodiments result from the depending claims.

In order to overcome this problem, a method for selecting a network node for handover of a mobile terminal is provided, wherein said selection is based on a profile information of said mobile terminal comprising at least two networks that are coupled with different levels of integration.

Hence, the profile information of the mobile terminal preferably identifies two or more networks or radio access technologies that may be subject to the handover.

The at least two networks are preferably coupled with different levels of integration, i.e. they may represent a loose, a very loose or a tight coupling. In this regard, the different networks can share one core network or they may be connected via, e.g., an IP multimedia subsystem (IMS). In the first case, the network node selected may be a point of service for both networks supplied by the same core network. However, reaching a network coupled to another network by the IMS only, a point of service for the initiating network may launch a request towards another network node, in particular a point of service at a higher hierarchy level, which in return decides about the handover. Accordingly, different points of services may be organized as a hierarchical structure, in particular as a tree structure, depending on the level of integration, e.g., a level of how radio access technologies may be coupled.

It is noted that the level of integration may relate to a selection of radio access technologies (RATs): For example, a first (bottom) level PoS may comprise a single RAT, wherein several such (bottom) levels PoSs may exist in parallel, in particular comprising a different RAT each. A higher level of integration may be a PoS comprising two (or more) RATs, wherein combinations of different RATs may result in different PoSs. A further next (higher) level of integration may result in a PoS comprising several RATs that are very loosely coupled, e.g. via the Internet. If it is not feasible for a PoS below such high-level PoS to decide about the handover, the high-level PoS may be asked by the PoS below to decide about the handover.

This approach proposes a method to select the appropriate network node for handover decisions based on the capabilities of the user terminal in particular within heterogeneous networks where radio access technologies are coupled with different levels of integration. Information on the user's subscriptions and capabilities of the terminals may influence this decision as well.

The proposed method can be used to select the appropriate network node that controls handover based on the terminal capabilities and on the network coupling scheme. The solution suggested herein may preferably be based on IEEE 802.21 and it thus may extend its features.

The approach further allows utilizing a user terminal's capabilities and their association to the interworking subsystems and/or RATs with appropriate PoS, e.g., choosing a PoS at a (logical) location where the radio protocol is located to enable a joint radio resource management.

In an embodiment, said profile information of the mobile terminal comprises at least one of the following:
- capabilities of the mobile terminal;
- information regarding the subscription of a user associated with the mobile terminal;
- a radio access technology coupling scheme;
- a quality-of-service requirement, in particular a delay.

In another embodiment, each of the at least two networks comprises one of the following radio access technologies:
- an LTE radio access technology;
- a GSM radio access technology;
- a 3G radio access technology;
- a WiMAX radio access technology;
- a WLAN radio access technology;
- an IMT-A radio access technology.

In a further embodiment, said network node is a point of service that is coupled with at least one level of integration.

In a next embodiment, the point of service decides on the handover or requests a further point of service to decide about the handover.

It is also an embodiment that said further point of service is a network node of a higher level of integration.

Pursuant to another embodiment, said network node utilizes at least one further network node that is coupled with a different, in particular with a higher level of integration.

According to an embodiment, said network node decides about processing the handover.

According to another embodiment, the different levels of integration comprise at least one of the following:
- a tight coupling of different radio access technologies;
- a loose coupling of different radio access technologies;
- a very loose coupling of different radio access technologies.

The problem stated above is also solved by a device comprising a and/or being associated with a processor unit and/or a hard-wired circuit and/or a logic device that is arranged such that the method as described herein is executable thereon.

According to an embodiment, the device is a or is associated with a communication device, in particular a mobile terminal and/or a network node (base station or point of service).

Said device may in particular be or be associated with any network node or point of service or an according functionality, wherein such network node and/or point of service (functionality) may at least partially realized in software.

The problem stated supra is further solved by a communication system comprising the device as described herein.

Embodiments of the invention are shown and illustrated in the following figures:
- Fig.2: shows an exemplary deployment scenario of a heterogeneous communication system comprising multiple levels of coupling;
- Fig.3: a media independent handover signaling for hierarchical handover decision.

The approach provided herein allows for an efficient selection of network nodes that are responsible for network controlled handover (NCHO) in particular based on terminal capabilities and radio access technology (RAT) coupling schemes.

Network controlled inter-system handover decisions are preferably executed by a Point of Service (PoS) that is aware of the radio access technologies. The tighter the coupling scheme of two radio access technologies the lower will be the distance (in terms of signaling delay and/or hops) between the PoS and the mobile terminal. An operator may choose different coupling schemes for different pairs of radio access technologies. This results in multiple PoSs within the operator's network.

The solution provided supports a dynamic negotiation and selection of a responsible PoS in particular based on the mobile terminal's capabilities (e.g., its radio technologies available) and/or on the operator's technology coupling scheme. PoS selection is terminal-wise, hence for terminals with different RAT capabilities, the PoS allocation, however, can be solved differently.

The handover signaling used here may in particular be based on IEEE 802.21 Media Independent Handover (MIH). The approach provided herewith introduces a hierarchy of MIH enabled network nodes and proposes a mechanism to relay MIH signaling between primary and secondary PoSs deeper within the network. If a primary PoS cannot make the handover decision on its own, it may preferably forward requests to a secondary PoS. Thereby, the local or primary PoS may act as a proxy towards PoSs at a higher level of the hierarchy.

### Further advantages:

a. Hierarchical mobility management:
   Decisions are made locally if possible (tight coupling scenarios) to avoid unnecessary decisions made by remote entities. A fallback to remote decisions is an option in case of loose coupling or inter-operator decisions.
b. Subscription based mobility management:
   Based on information provided by a Home Subscriber Server (HSS), handover decisions may be relayed to higher levels in the mobility management hierarchy.
c. Distributed MIH function and its activation procedure:
   In particular according to the network coupling structure and terminal capabilities the MIH function is realized in a distributed manner throughout the network.
d. Terminal-specific PoS selection:
   The PoS can be applied differently for each mobile terminal and/or particular profile information of said mobile terminal.

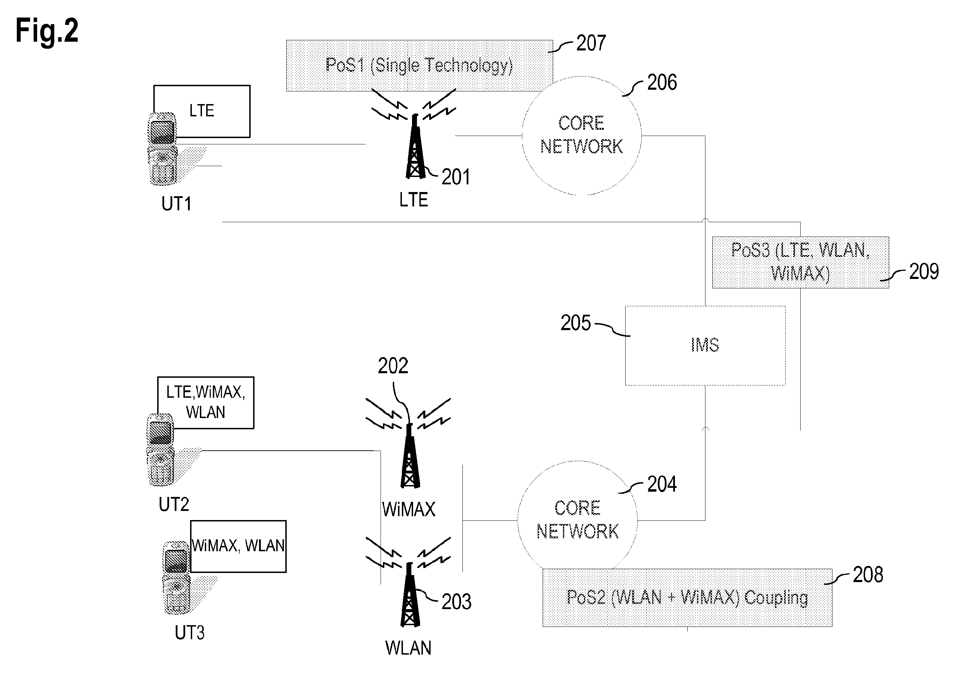

**Fig.2** shows an exemplary deployment scenario of a heterogeneous communication system. It features cell deployments of 3GPP Long Term Evolution (LTE) 201, WiMax 202 and WLAN 203. The various radio access technologies are coupled at different levels. WiMAX and WLAN are tightly coupled and share the same core network 204. Both technologies are loosely coupled with the LTE technology by an IP Multimedia Subsystem (IMS) 205. LTE 201 is coupled to a core network 206.

Mobility management for this scenario is supported by three network nodes PoS1 207, PoS2 208 and PoS3 209, each being responsible for different types of handover decisions.

PoS1 207 is only aware of the LTE technology and is responsible for intra-system handovers for this technology. PoS2 208 knows both, the WiMAX and the WLAN technology and is responsible for inter-system handovers between those radio access technologies. PoS3 209 is used to loosely couple all three technologies and is responsible for inter-system handovers between all three technologies.

Whenever a mobile terminal (in particular a user terminal or a user equipment UE) attaches to a new link, i.e. it changes the current cell, the MIHF detects its new PoS. This can either be done by using layer 2 (L2) or layer 3 (L3) mechanisms.

This new PoS is preferably found if it is within the mobile terminal's same broadcast domain. In the scenario of Fig.2, only PoS1 207 and PoS2 208 are primary point of services, whereas PoS3 209 is a secondary point of service.

The primary PoSs 207 and 208 may be supported by the secondary PoS 209. If a PoS cannot handle a handover decision of a given type, it will forward this decision to the appropriate secondary PoS.

As an example, the mobile terminal UT2 of Fig.2 leaves the WiMax cell 202 towards the LTE cell 201. As an assumption, the mobile terminal UT2 may then only be supported by said LTE cell 201. The type of handover required in this case is an intersystem handover from WiMax to LTE. The mobile terminal UT2 is associated to PoS2 208 prior to the handover. In any case the primary PoS 208 monitors the link status of the WiMAX link and queries candidate cells for handover when the link quality degrades. If the candidate cell set comprises LTE cells and the policy within the primary PoS prefers LTE links for handover targets then the primary PoS will contact its secondary PoS. In the example of Fig.2, the primary PoS2 208 knows (by means of configuration) that the secondary PoS3 209 located somewhere within the IMS can handle such request. Hence, PoS2 208 forwards this request on behalf of the mobile terminal UT2 and allows PoS3 209 to carry out the handover decision.

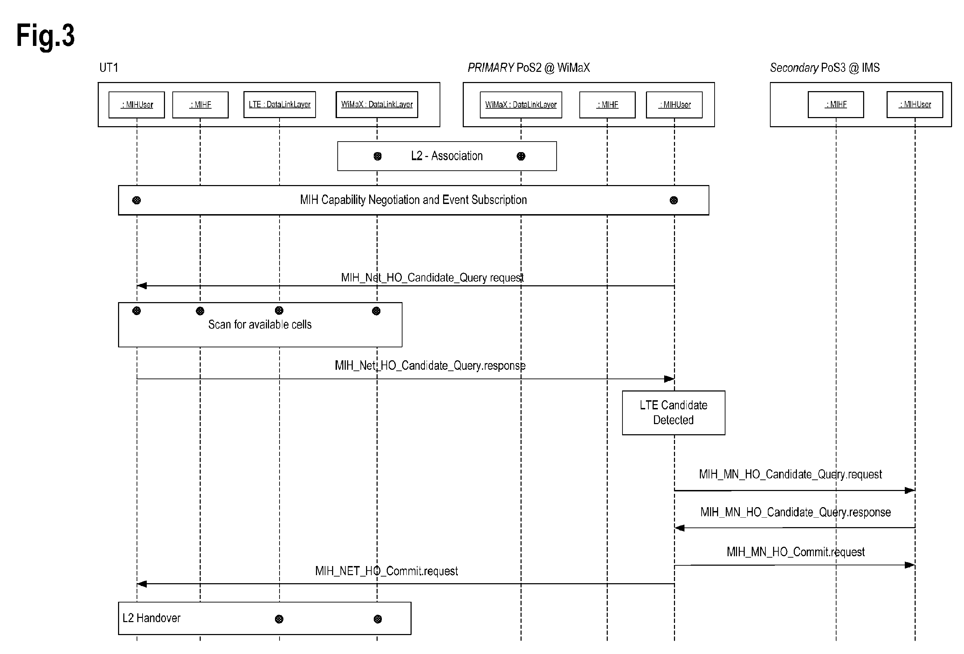

The primary PoS2 208 acts towards the secondary PoS3 209 as if it is a mobile terminal and sends a "MIH_MN_HO_Candidate_Query". The PoS3 209 processes this list and responds by providing a preferred candidate list. The preference may be determined by call admission control and load balancing mechanisms or any other policy. The primary PoS2 208 then selects one of the preferred candidates and tells the mobile terminal UT2 to perform a handover to that candidate. It can also inform PoS3 209 about such handover to allow for resource allocation. **Fig.3** illustrates this procedure.

The solution provided herewith allows in particular an in time optimal user association to handover decision entities according to the cell structure and network coupling structure.

It further enables flexible deployments with a mixture of different integration levels.

Advantageously, the approach provided results in a low call dropping rate and a high degree of service continuity.

Also, an effective triggering with reduced signaling overhead compared to IEEE 802.21's handover scheme is provided.

Moreover, a mismatch of the protocol allocation and function allocation requiring additional signaling and parameter translation between entities is efficiently resolved. Appropriate deployment of PoSs within network nodes that are able to interpret technology-specific measurements result in handover decisions of better quality. For example a MIHF PoS can be allocated at a multi-standard base station which supports terminals of various RATs or standards.

### Abbreviations

- HO: Handover
- HSS: Home Subscriber Server
- IMS: IP Multimedia Subsystem
- IP: Internet Protocol
- LTE: Long Term Evolution
- MIH: Media Independent Handover
- MIHF: Media Independent Handover Function
- MN: Mobile Node
- NCHO: Network Controlled Handover
- PoS: Point of Service
- RAT: Radio Access Technology
- SAP: Service Access Point
- UT: User Terminal

## Claims

1. A method for selecting a network node for handover of a mobile terminal, based on a profile information of said mobile terminal comprising at least two networks that are coupled with different levels of integration.

2. The method according to claim 1, wherein said profile information of the mobile terminal comprises at least one of the following:
- capabilities of the mobile terminal;
- information regarding the subscription of a user associated with the mobile terminal;
- a radio access technology coupling scheme;
- a quality-of-service requirement, in particular a delay.

3. The method according to any of the preceding claims, wherein each of the at least two networks comprises one of the following radio access technologies:
- an LTE radio access technology;
- a GSM radio access technology;
- a 3G radio access technology;
- a WiMAX radio access technology;
- a WLAN radio access technology;
- an IMT-A radio access technology.

4. The method according to any of the preceding claims, wherein said network node is a point of service that is coupled with at least one level of integration.

5. The method according to claim 4, wherein the point of service decides on the handover or requests a further point of service to decide about the handover.

6. The method according to claim 5, wherein said further point of service is a network node of a higher level of integration.

7. The method according to any of the preceding claims, wherein said network node utilizes at least one further network node that is coupled with a different, in particular with a higher level of integration.

8. The method according to any of the preceding claims, wherein said network node decides about processing the handover.

9. The method according to any of the preceding claims, wherein the different levels of integration comprise at least one of the following:
- a tight coupling of different radio access technologies;
- a loose coupling of different radio access technologies;
- a very loose coupling of different radio access technologies.

10. A device comprising a and/or associated with a processor unit and/or a hard-wired circuit and/or a logic device that is arranged such that the method according to any of the preceding claims is executable thereon.

11. The device according to claim 10, wherein said device is a or is associated with a communication device, in particular a mobile terminal and/or a network node.

12. Communication system comprising the device according to any of claims 10 or 11.
